# EUROPÄISCHE PATENTANMELDUNG

(11) **EP 1 424 376 A1**
(43) Veröffentlichungstag der Anmeldung: **02.06.2004**
(21) Anmeldenummer: 03103606.4
(22) Anmeldetag: 30.09.2003
(51) Int. Cl.: C09D 167/00, C09D 5/03

(54) **Polyester-Pulverlacke für Beschichtungen mit mattem Erscheinungsbild**

(30) Priorität: 26.11.2002 DE 10255250
(71) Anmelder: Degussa AG, 40474 Düsseldorf (DE)
(72) Erfinder: Weiss, Jörn-Volker, 45721 Haltern am See (DE); Grenda, Werner, 44627 Herne (DE)

(57) **Zusammenfassung**

Die Erfindung beschreibt neue Pulverlacke auf der Basis von sauren Polyestern, Polyharnstoffen, Vernetzern und anderen üblichen Zusatzstoffen für Beschichtungen mit mattem Erscheinungsbild.

## Beschreibung

Die Erfindung beschreibt Pulverlacke auf der Basis von sauren Polyestern, Polyharnstoffen, Vernetzern und anderen üblichen Zusatzstoffen für Beschichtungen mit mattem Erscheinungsbild.

Beschichtungssysteme, die einem Substrat eine gleichmäßig ebene und matte Oberfläche verleihen, besitzen ein erhebliches Interesse. Die Ursache dafür ist überwiegend praktischer Art. Glänzende Flächen erfordern ein weitaus höheres Maß an Reinigung als matte Flächen. Darüber hinaus kann es aus sicherheitstechnischen Gründen wünschenswert sein, stark reflektierende Flächen zu vermeiden.

Das einfachste Prinzip, eine matte Oberfläche zu erhalten, besteht darin, dem Pulverlack je nach Ausmaß des gewünschten Matteffektes, kleinere oder größere Mengen Füllstoffe, wie z. B. Kreide, fein verteiltes Siliciumoxid oder Bariumsulfat, beizumischen. Diese Zusätze bewirken jedoch eine Verschlechterung der lacktechnischen Filmeigenschaften, wie Haftung, Flexibilität, Schlagfestigkeit und Chemikalienbeständigkeit.

Die Zugabe von Stoffen, die mit dem Lack unverträglich sind, wie z. B. Wachse oder Cellulosederivate, bewirkt zwar deutlich eine Mattierung, aber geringfügige Änderungen während des Extrudierens führen zu Schwankungen im Oberflächenglanz. Die Reproduzierbarkeit des Matteffektes ist nicht gewährleistet.

Polyester-Pulverlacke sind Pulverlacke, die als Bindemittel saure Polyester und Vernetzer mit reaktiven Glycidyl- bzw. Hydroxyalkylamid-Gruppen enthalten. Marktübliche Vemetzer, die weltweit zum Einsatz kommen, sind Tri-glycidyl-isocyanurat (TGIC) und β-Hydroxyalkylamid und deren Derivate. Pulverlacke auf Basis hydroxylgruppenhaltiger Polyester fallen nicht unter den Begriff Polyester-Pulverlacke. Da sie ausschließlich mit Polyisocyanaten vemetzt werden, bilden sie die Gruppe der Polyurethan-Pulverlacke.

Polyester- wie auch Polyurethan-Pulverlacke führen zu witterungsstabilen Beschichtungssystemen, d. h. sie sind für Anwendungen im Außenbereich einsetzbar und damit von großer technischer und wirtschaftlicher Bedeutung. Über die Möglichkeiten zur Mattierung beider Systeme sind zahlreiche Veröffentlichungen und Patente erschienen, z. B. DE-OS 196 30 844, DE-OS 19637 375 , DE-OS 19637 377, DE-OS 19816 547, EP 0 698 645 und R. Franiau, Advances in β-Hydroxy-alkylamide crosslinking chemistry ECJ, (2002) 10, p. 409 ff.

In der DE-OS 100 42 318 werden nun matte Polyurethan-Pulverlacke beschrieben, die aus bestimmten hydroxylgruppenhaltigen Polyestern, marktüblichen Polyisocyanaten als Vernetzern und speziellen, separat hergestellten Polyhamstoffen als Mattierungsmitteln bestehen. Die Mattierung des Systems wird durch die Verwendung bestimmter hydroxylgruppenhaltigen Polyester in Kombination mit Polyharnstoffen erzielt.

Des Weiteren beschreibt die DE 102 33 103 matte Polyurethan-Pulverlacke, die bestimmte Kombinationen amorpher und/oder (semi)kristalliner Polyester, Polyharnstoffe, Vernetzer sowie übliche Hilfs- und Zusatzstoffe enthält.

Überraschenderweise wurde nun gefunden, dass die genannten Mattierungsprinzipien auch auf Polyester-Pulverlacke angewandt werden können, wenn anstelle der Kombination amorpher/kristalliner hydroxlgruppenfunktionalisierter Polyester die entsprechenden carboxylgruppenhaltigen Polyester in Kombination mit Polyharnstoffen und auch gegebenenfalls anderen Füllstoffen eingesetzt werden.

Gegenstand der Erfindung sind Polyester-Pulverlacke für Beschichtungen mit mattem Erscheinungsbild, im Wesentlichen enthaltend

Polyester-Pulverlacke im Wesentlichen enthaltend
A) 0,5 - 25 Gew.-% Polyharnstoff,
B) 45 - 85 Gew.-% COOH-Gruppen-haltigen Polyester aufgebaut aus Polyolen und Polycarbonsäuren und/oder deren Ester und/oder Anhydride mit einer COOH-Zahl von 15 - 150 mg KOH/g, bestehend aus
B1) 40 - 80 Gew.-% mindestens eines amorphen Polyesters und
B2) 20 - 60 Gew.-% mindestens eines (semi)kristallinen Polyesters,
C) 1 - 20 Gew.-% mindestens eines Vemetzers auf der Basis einer Polyepoxy- oder Polyhydroxyalkylamid-Verbindung mit einer Funktionalität von mindestens 2,
wobei pro COOH-Gruppe des Polyesters 0,6 bis 1,2 reaktive Vernetzergruppen zur Verfügung stehen.

Die Polyester-Pulverlacke können D1) 1 - 50 Gew.-% Hilfs- und Zusatzstoffe enthalten.

Bei den Polyharnstoffen A) handelt es sich um die folgenden näher beschriebenen Produkte. Sie sind prinzipiell aus der EP 1 184 399 bekannt.

Zur Herstellung der Polyharnstoffe können alle bekannten aliphatischen, cycloaliphatischen, araliphatischen sowie aromatischen Isocyanate mit mindestens zwei NCO-Gruppen und deren Isocyanurate, falls zugänglich, in reiner Form oder als beliebige Mischungen untereinander verwendet werden. Beispielhaft seien aufgeführt: Cyclohexandiisocyanate, Methylcyclohexandiisocyanate, Ethylcyclohexandiisocyanate, Propylcyclohexandiisocyanate, Methyldiethylcyclohexandiisocyanate, Phenylendiisocyanate, Toluylendiisocyanate, Bis(isocyanatophenyl)methan, Propandiisocyanate, Butandiisocyanate, Pentandiisocyanate, Hexandiisocyanate (z. B. Hexamethylendiisocyanat (HDI) oder 1,5-Diisocyanato-2-methylpentan (MPDI)), Heptandiisocyanate, Octandiisocyanate, Nonandiisocyanate (z. B. 1,6-Diisocyanato-2,4,4-trimethylhexan und 1,6-Diisocyanato-2,2,4-trimethylhexan (TMDI)), Nonantriisocyanate (z. B. 4-Isocyanatomethyl-1,8-octandiisocyanat (TIN)), Dekandi- und -triisocyanate, Undekandi- und -triisocyanate, Dodecandi- und -triisocyanate, Isophorondiisocyanat (IPDI), Bis(isocyanatomethylcyclohexyl)methan (H₁₂MDI), Isocyanatomethylmethylcyclohexylisocyanate, 2,5(2,6)-Bis(isocyanatomethyl)bicyclo[2.2.1]heptan (NBDI), 1,3-Bis(isocyanatomethyl)cyclohexan (1,3-H₆-XDI) sowie 1,4-Bis(isocyanatomethyl)cyclohexan (1,4-H₆-XDI). Die Aufzählung versteht sich inklusive aller Regio- und Stereoisomeren der beispielhaft benannten Isocyanate. Bevorzugt werden HDI, IPDI, MPDI, TMDI, 1,3- und 1,4- H₆-XDI, NBDI sowie Mischungen aus HDI und IPDI eingesetzt. Bevorzugte Polyharnstoffe im Rahmen der Erfindung sind solche, die aus IPDI, IPDI-Isocyanurat, HDI oder HDI-Isocyanurat und beliebigen Gemischen daraus bestehen.
Im Rahmen der Erfindung können alle aliphatischen, (cyclo)aliphatischen, cycloaliphatischen und aromatischen Diamine und/oder Polyamine (C₅ - C₁₈) eingesetzt werden.

Als Diamine sind prinzipiell 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, 3-(Cyclohexylamino)propylamin, 4,4'-Diaminodicyclohexylmethan, Isophorondiamin, 4,7-Dioxadecan-1,10-diamin, N-(2-Aminoethyl)-1,2-ethandiamin, N-(3-Aminopropyl)-1,3-propandiamin, N,N"-1,2-Ethandiylbis-(1,3-propandiamin) sowie Hexamethylendiamine, die auch einen oder mehrere C₁-C₄-Alkylreste tragen können, geeignet. Auch Mischungen der genannten Diamine sind verwendbar. Bevorzugt wird Isophorondiamin eingesetzt.

Ebenfalls einsetzbar sind Polyamine, wie z. B. 4-Aminomethyl-1,8-octandiamin, Diethylentriamin, Dipropylentriamin, Triethylentetramin und Tetraethylenpentamin.

Im Allgemeinen werden Polyharnstoffe mit einem NCO/NH₂-Verhältnis von 0,8 bis 1,2 zu 1 hergestellt. Bei Einsatz äquimolarer Mengen mit einem NCO/NH₂-Verhältnis von 1 zu 1 werden unendlich vernetzte, feste und spröde Polymere erhalten, die erst oberhalb von 240 °C unter Zersetzung schmelzen und in Lösemitteln unlöslich sind.

Bevorzugte Polyharnstoffe im Rahmen der Erfindung sind solche, die aus IPD und IPDI, und/oder IPDI-Isocyanurat, und/oder HDI und/oder HDI-Isocyanurat bestehen. Diese weisen Molmassen von mehr als 4 000 auf und enthalten mindestens 8 Gew.-%, bevorzugt 20 Gew.-%, besonders bevorzugt 40 bis 100 Gew.-%, Isocyanurate und/oder Amine mit einer Funktionalität > 2, bevorzugt Isocyanurate, bevorzugt IPDI- und/oder HDI-Isocyanurat. Auch Polyharnstoffe aus reinen Isocyanuraten und IPD sind bevorzugt. Die Polyharnstoffe sind in Mengen von 0,5 bis 25 Gew.-%, bevorzugt von 3 - 15 Gew.-%, besonders bevorzugt von 5 - 10 Gew.-%, in den Pulverlacken enthalten.

Bei dem COOH-Gruppen-haltigen Polyester B) ist es erfindungswesentlich, dass es sich dabei um Mischungen aus 40 - 80 Gew.-%, bevorzugt 60 - 70 Gew.-%, mindestens eines amorphen Polyesters B1) und 20 - 60 Gew.-%, bevorzugt 30 - 40 Gew.-%, mindestens eines (semi)kristallinen Polyesters B2) handelt.

Die amorphen Polyester B1) besitzen eine Funktionalität von 2,0 bis 5,0, eine Säurezahl von 15 - 150 mg KOH/g, eine Glasübergangstemperatur von 35 bis 85 °C und ein mittleres Molekulargewicht von 2 000 bis 7 000, der Schmelzbereich liegt zwischen 60 und 110 °C. Die amorphen Polyester basieren auf linearen oder verzweigten Polycarbonsäuren und/oder deren Derivaten, wie Anhydride und Ester, und aliphatischen oder cycloaliphatischen, linearen oder verzweigten Polyolen. Als Dicarbonsäure werden Isophthalsäure, Phthalsäure, Adipinsäure, Azelainsäure, Sebacinsäure, Dodecandisäure, Trimellitsäure, Hexahydroterephthalsäure, Hexahydrophthalsäure, Bernsteinsäure und/oder 1,4-Cyclohexandicarbonsäure eingesetzt. Als Polyolkomponente für die amorphen Polyester werden lineare, aliphatische oder cycloaliphatische Diole in Mengen von mindestens 80 mol-%, bezogen auf die Gesamtmenge aller eingesetzten Polyole, eingesetzt. Beispiele für derartige Diole sind Monoethylenglykol, Diethylenglykol, Hydroxypivalinsäureneopentylglykolester, Neopentylglykol, Cyclohexandimethanol, Butandiol-1,4, Pentandiol-1,5, Pentandiol-1,2, Hexandiol-1,6 oder Nonandiol-1,9. In Mengen von maximal 20 mol-% können gegebenenfalls verzeigte, aliphatische oder cycloaliphatische Polyole mitverwendet werden. Beispiele für derartige Polyole sind Trimethylolpropan, Glyzerin oder Pentaerythrit.

Die (semi)kristallinen Polyester B2) weisen in der Regel eine Funktionalität von 2,0 bis 4,0, eine Säurezahl von 15 - 150 mg KOH/g auf. Die Schmelzpunkte liegen zwischen 60 und 130 °C und die Glasübergangstemperatur bei <-10 °C, das mittlere Molekulargewicht liegt zwischen 1 800 und 6 500. Die Polyester basieren auf linearen Dicarbonsäuren und/oder deren Derivaten, wie Anhydride und Ester, und aliphatischen oder cycloaliphatischen, linearen oder verzweigten Polyolen. Als Dicarbonsäuren werden Bernsteinsäure, diese ist bevorzugt, und/oder Adipinsäure und/oder Sebacinsäure und/oder Dodecandisäure in Mengen von mindestens 85 mol-%, bezogen auf die Gesamtmenge aller Carbonsäuren, eingesetzt. In dieser Erfindung schließt der Ausdruck Dicarbonsäure stets auch deren Ester, Anhydride oder Säurechloride ein, da sie selbstverständlich ebenfalls eingesetzt werden können. In deutlich geringeren Anteilen bis maximal 15 mol-% können gegebenenfalls andere aliphatische, cycloaliphatische oder aromatische Dicarbonsäuren mitverwendet werden. Beispiele für derartige Dicarbonsäuren sind Glutarsäure, Azelainsäure, 1,4-, 1,3- oder 1,2-Cyclohexandicarbonsäure, Terephthalsäure oder Isophthalsäure. Als Polyolkomponente für die (semi)kristallinen Polyester werden Monoethylenglykol und/oder Butandiol-1,4, dieses ist bevorzugt, und/oder Hexandiol-1,6 in Mengen von mindestens 80 mol-%, bezogen auf die Gesamtmenge aller Polyole, eingesetzt. In Mengen von maximal 20 mol-% können gegebenenfalls andere aliphatische oder cycloaliphatische, lineare oder verzweigte Polyole mitverwendet werden. Beispiele solcher Polyole sind Diethylenglykol, Hydroxypivalinsäureneopentylglykol, Neopentylglykol, Cyclohexandimethanol, Pentandiol-1,5, Pentandiol-1,2, Nonandiol-1,9, Trimethylolpropan, Glyzerin oder Pentaerythrit.

Die (semi)kristallinen und amorphen Polyester können auf an sich bekannte Weise durch Kondensation von Polyolen und Polycarbonsäuren oder deren Ester, Anhydride oder Säurechloride in einer Inertgasatmosphäre bei Temperaturen von 100 bis 260°C, vorzugsweise von 130 bis 220 °C, in der Schmelze oder in azeotroper Fahrweise gewonnen werden, wie es z. B. in Methoden der Organischen Chemie (Houben-Weyl), Bd. 14/2, 1 - 5, 21 - 23, 40 - 44, Georg Thieme Verlag, Stuttgart, 1963, bei C. R. Martens, Alkyl Resins, 51 -59, Reinhold Plastics Appl., Series, Reinhold Publishing Comp., New York, 1961, oder in den DE-OSS 27 35 497 und 30 04 903, beschrieben ist.

Als Vernetzer C) sind prinzipiell alle bekannten Vemetzer auf der Basis von Polyepoxiden bzw. Polyhydroxyalkylamiden für den Bereich Pulverlacke einsetzbar. Bevorzugt werden marktgängige Produkte, wie ARALDIT PT 810, PT 910, PT 912 (Vantico), PRIMID 552, QM 1260, SF 4510 (Ems) und VESTAGON HA 320 (Degussa) sowie PROSID H, S (SIR), eingesetzt.

Besonders bevorzugt sind β-Hydroxylalkylamide. Sie werden z. B. in der EP 0957 082, EP 0 649 890, EP 0 322 834, EP 0 322 807, EP 0 262 872, US 4 076 917 beschrieben.

In einer bevorzugten Ausführungsform der Erfindung werden folgende β-Hydroxyalkylamide C) eingesetzt: 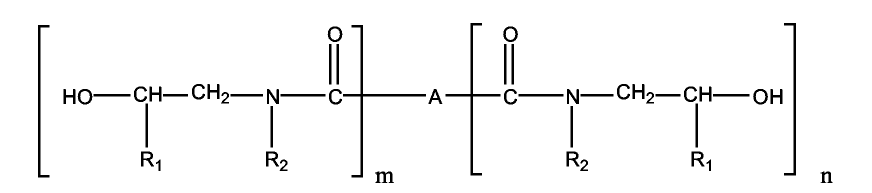 in der R₁ Wasserstoff, ein aromatischer Rest oder eine C₁-C₅-Alkylgruppe, R₂ Wasserstoff, ein aromatischer Rest eine C₁-C₅-Alkylgruppe oder 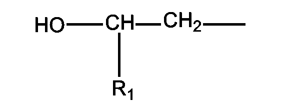 und A eine chemische Bindung oder eine einwertige oder mehrwertige organische Gruppe, ausgewählt aus gesättigten, ungesättigten oder aromatischen Kohlenwasserstoffgruppen, oder substituierten Kohlenwasserstoffgruppen, mit 2 bis 20 Kohlenstoflatomen, bedeuten, m ist 1 bis 2, n ist 0 bis 2 und m + n ist mindestens 1. Besonders bevorzugt weisen diese Verbindungen eine Funktionalität von vier auf. Die β-Hydroxyalkylamide sind bevorzugt in Mengen von 2 - 10 Gew.-%, besonders bevorzugt von 3 - 5 Gew.-%, enthalten.

Die in den erfindungsgemäßen Polyester-Pulverlacken enthaltenen Hilfs- und Zusatzstoffe D) sind z. B. Verlaufsmittel, Pigmente, Füllstoffe und Katalysatoren. Diese sind üblicherweise in Mengen von 1 *-* 50 Gew.-% enthalten.

### Allgemeine Herstellvorschrift der Pulverlacke

Zur Herstellung der gebrauchsfertigen Pulverlacke werden das COOH-funktionalisierte Polyestergemisch, der Vernetzer, der Polyharnstoff, Verlaufsmittel, Pigmente, Füllstoffe und gegebenenfalls Katalysatoren miteinander bei Raumtemperatur gemischt und anschließend auf einem Extruder oder Kneter bei Temperaturen von 100 - 140°C homogenisiert. Das Verhältnis von Harz zu Vernetzer wird so gewählt, dass pro COOH-Gruppe des Harzes 0,6 bis 1,2, vorzugsweise 0,8 - 1,0, reaktive Vernetzergruppen zur Verfügung stehen.

Nach dem Erkalten wird das Extrudat gebrochen, gemahlen und anschließend auf eine Korngröße < 100 µm abgesiebt. Das so hergestellte Pulver wird mit einer elektrostatischen Pulverspritzanlage bei 60 KV auf entfettete Eisenbleche appliziert und in einem Umlufttrockenschrank zwischen 160 bis 210 °C eingebrannt.

Die Formulierungen enthielten 30 Gew.-% Titandioxid (z. B. Kronos 2160 der Fa. Kronos), 1 Gew.-% Verlaufmittel ( z. B. Resiflow PV 88 der Worlée-Chemie), 0,2- 0,5 Gew.-% Entgasungsmittel ( z. B. Benzoin der Fa. Merck-Schuchard).

### Beispiele

### 1) Polyharnstoff

In einem 2-1-Dreihalskolben, ausgerüstet mit Rührer, Tropftrichter und Heizpilz, werden 70 g IPD, verdünnt in 1 000 ml Toluol, vorgelegt. Unter Rühren wird dann die äquivalente (NH₂: NCO = 1 : 1) Menge des Isocyanurats, verdünnt mit der gleichen Menge an Toluol, zu der vorgelegten Aminlösung langsam hinzugetropft. Nach erfolgter Zugabe wird das Reaktionsgemisch noch 2 Stunden unter Rückfluss erhitzt. Anschließend wird auf Raumtemperatur abgekühlt, das entsprechende Festprodukt (Polyharnstoff) abfiltriert und im Vakuum getrocknet (3 bis 6 Stunden bei 130 bis 170 °C).

### Polyharnstoff-Beispiel (Angabe in Masse-Teilen)

| | **IPD** | **IPDI-Trimer**^{**1)**} |
|---|---|---|
| PH-1 | 70 | 183 |

| | | |
|---|---|---|
| ¹⁾VESTANAT T 1890, Degussa-Hüls AG | | |

Das Produkt ist ein weißer/farbloser, spröder Feststoff, der in üblichen Lösemitteln unlöslich ist und nur unter Zersetzung oberhalb von 240 °C schmilzt.

Zum Einsatz in Pulverlacken wird das Produkt gemahlen und auf ≤ 100 µm abgesiebt.

### 2) Amorphe Polyester B1)

URALAC P 875, SZ-Zahl: 35 mg KOH/g, TG: 56 °C (DSM, Niederlande)
URALAC P 6600, SZ-Zahl: 33 mg KOH/g, TG: 57 °C (DSM, Niederlande)

### 3) Herstellung des (semi)kristallinen Polyesters B2)

Die Herstellung des (semi)kristallinen Polyesters B2) erfolgt durch Umsetzung des kommerziell verfügbaren kristallinen hydroxylfunktionalisierten Polyesters Dynacoll 7390 (Produkt der Degussa AG) mit Bernsteinsäureanhydrid. In einem 5 Liter beheizbaren Rührreaktor werden 3 500 g Dynacoll 7390 (OH-Zahl 32 mg KOH/g; Schmelzbereich 105 - 115 °C) gegeben und aufgeschmolzen, zu der Schmelze (ca.160 °C) werden dann unter Rühren innerhalb von 10 Min. 210 g Bernsteinsäureanhydrid hinzugefügt. Das Reaktionsgemisch wird anschließend 2 Stunden auf 180 - 210 °C erhitzt. Danach wird der saure Polyester ausgetragen, abgekühlt und das entstandene Festprodukt (Säurezahl 34 mg KOH/g; OH-Zahl 2 mg KOH/g) zerkleinert.

### 4) Formulierungen

### Beispiel 1: Hydroxyalkylamid-System

Glanz: 45 Skalenteile im 60° ≮
Erichsentiefung 11 mm
Kugelschlag (direct/reverse) 70/10 in·lb

| Produkte | | Massen-% | Einsatzstoffe |
|---|---|---|---|
| | | | |
| Vernetzer | | 3,50 | VESTAGON EP-HA 320 |
| Amorpher Polyester | | 45,60 | URALAC P 875 |
| Semikristalliner Polyester | | 19,60 | B2) |
| Polyharnstoff | | 5,00 | PH1 |
| Pigment TiO₂ | | 25,00 | KRONOS 2160 |
| Verlaufsmittel | | 1,00 | RESIFLOW PV 88 |
| Entgasungsmittel | | 0,30 | Benzoin |

### Beispiel 2: Hydroxyalkylamid-System

Glanz: 30 Skalenteile im 60° ≮
Erichsentiefung 11,5 mm
Kugelschlag (direct/reverse) 110/100 in·lb

| Produkte | | Massen-% | Einsatzstoffe |
|---|---|---|---|
| | | | |
| Vernetzer | | 3,50 | VESTAGON EP-HA 320 |
| Amorpher Polyester | | 39,10 | URALAC P 875 |
| Semikristalliner Polyester | | 26,10 | B2) |
| Polyharnstoff | | 5,00 | PH1 |
| Pigment TiO₂ | | 25,00 | KRONOS 2160 |
| Verlaufsmittel | | 1,00 | RESIFLOW PV 88 |
| Entgasungsmittel | | 0,30 | Benzoin |

### Beispiel 3: TGIC-System

Glanz: 37 Skalenteile im 60° ≮
Erichsentiefung 11 mm
Kugelschlag (direct/reverse) 80/20 in·lb

| Produkte | | Massen-% | Einsatzstoffe |
|---|---|---|---|
| | | | |
| Vernetzer | | 5,00 | ARALDIT PT 810 |
| Amorpher Polyester | | 44,45 | URALAC P 6600 |
| Semikristalliner Polyester | | 19,05 | B2) |
| Polyharnstoff | | 5,00 | PH1 |
| Pigment TiO₂ | | 25,00 | KRONOS 2160 |
| Verlaufsmittel | | 1,00 | RESIFLOW PV 88 |
| Entgasungsmittel | | 0,50 | Benzoin |

### Beispiel 4: TGIC-System

Glanz: 24 Skalenteile im 60° ≮
Erichsentiefung 12 mm
Kugelschlag (direct/reverse) 130/100 in·lb

| Produkte | | Massen-% | Einsatzstoffe |
|---|---|---|---|
| | | | |
| Vernetzer | | 5,00 | ARALDIT PT 810 |
| Amorpher Polyester | | 38,10 | URALAC P 6600 |
| Semikristalliner Polyester | | 25,40 | B2) |
| Polyharnstoff | | 5,00 | PH1 |
| Pigment TiO₂ | | 25,00 | KRONOS 2160 |
| Verlaufsmittel | | 1,00 | RESIFLOW PV 88 |
| Entgasungsmittel | | 0,50 | Benzoin |

## Patentansprüche

1. Polyester-Pulverlacke im Wesentlichen enthaltend
A) 0,5 - 25 Gew.-% Polyharnstoff,
B) 50 - 90 Gew.-% COOH-Gruppen-haltigen Polyester aufgebaut aus Polyolen und Polycarbonsäuren und/oder deren Ester und/oder Anhydride mit einer COOH-Zahl von 15 -150 mg KOH/g, bestehend aus
B1) 40 - 80 Gew.-% mindestens eines amorphen Polyesters und
B2) 20 - 60 Gew.-% mindestens eines (semi)kristallinen Polyesters,
C) 1 - 25 Gew.-% mindestens eines Vemetzers auf der Basis einer Polyepoxy- oder Polyhydroxyalkylamid-Verbindung mit einer Funktionalität von mindestens 2,
wobei pro COOH-Gruppe des Polyesters 0,6 bis 1,2 reaktive Vemetzergruppen zur Verfügung stehen.

2. Polyester-Pulverlacke nach Anspruch 1,
**dadurch gekennzeichnet,**
**dass** sie zusätzlich 1 *-* 50 Gew.-% Hilfs- und Zusatzstoffe enthalten.

3. Polyester-Pulverlacke nach einem der Ansprüche 1 oder 2,
**dadurch gekennzeichnet,**
**dass** der Polyharnstoff A) aus mindestens einem difunktionellen Isocyanat und
mindestens einem mindestens difunktionellen Amin besteht, und ein NCO/NH₂-Verhältnis von 0,9 bis 1,1 zu 1 aufweist.

4. Polyester-Pulverlacke nach Anspruch 3,
**dadurch gekennzeichnet,**
**dass** der Polyharnstoff aus einem Isocyanat und/oder Isocyanurat besteht.

5. Polyester-Pulverlacke nach Anspruch 4,
**dadurch gekennzeichnet,**
**dass** das Isocyanat oder Isocyanurat aus IPDI, HDI und/oder HMDI ausgewählt wird.

6. Polyester-Pulverlacke nach mindestens einem der vorherigen Ansprüche,
**dadurch gekennzeichnet,**
**dass** der Polyharnstoff aliphatische, (cyclo)aliphatische, cycloaliphatische, aromatische Diamine und/oder Polyamine mit 5 bis 18 Kohlenstoffatomen enthält.

7. Polyester-Pulverlacke nach Anspruch 6,
**dadurch gekennzeichnet,**
**dass** als Amin IPD eingesetzt wird.

8. Polyester-Pulverlacke nach mindestens einem der vorherigen Ansprüche,
**dadurch gekennzeichnet,**
**dass**
A) 3 - 15 Gew.-%, bevorzugt 5 *-* 10 Gew.-%, Polyharnstoff enthalten sind.

9. Polyester-Pulverlacke nach mindestens einem der vorherigen Ansprüche,
**dadurch gekennzeichnet,**
**dass**
B1) 60 - 70 Gew.-% mindestens eines amorphen Polyesters und
B2) 30 - 40 Gew.-% mindestens eines (semi)kristallinen Polyesters
im Polyester B) enthalten sind.

10. Polyester-Pulverlacke nach mindestens einem der vorherigen Ansprüche,
**dadurch gekennzeichnet,**
**dass** der amorphe Polyester B1) eine Funktionalität von 2,0 bis 5,0, eine COOH-Zahl von 5 bis 150 mg KOH/g, einen Schmelzbereich von 60 bis 110°C, und eine Glasübergangstemperatur von 35 bis 85 °C aufweist.

11. Polyester-Pulverlacke nach Anspruch 10,
**dadurch gekennzeichnet,**
**dass** der Polyester B1) als Säurekomponente Isophthalsäure, Phthalsäure, Adipinsäure, Azelainsäure, Sebacinsäure, Dodecandisäure, Trimellitsäure, Hexahydroterephthalsäure, Hexahydrophthalsäure, Bernsteinsäure oder 1,4-Cyclohexandicarbonsäure, allein oder in Mischungen, enthält.

12. Polyester-Pulverlacke nach Anspruch 10 oder 11,
**dadurch gekennzeichnet,**
**dass** als Polyolkomponente für die amorphen Polyester lineare, aliphatische oder cycloaliphatische Diole in Mengen von mindestens 80 mol-%, bezogen auf die Gesamtmenge aller eingesetzten Polyole, allein oder in Mischungen, enthalten sind.

13. Polyester-Pulverlacke nach Anspruch 12,
**dadurch gekennzeichnet,**
**dass** Monoethylenglykol, Diethylenglykol, Hydroxypivalinsäureneopentylglykolester, Neopentylglykol, Cyclohexandimethanol, Butandiol-1,4, Pentandiol-1,5, Pentandiol-1,2, Hexandiol-1,6 oder Nonandiol-1,9, allein oder in Mischungen, enthalten sind.

14. Polyester-Pulverlacke nach Anspruch 12 oder 13,
**dadurch gekennzeichnet,**
**dass** maximal 20 mol-% verzweigte, aliphatische oder cycloaliphatische Polyole enthalten sind.

15. Polyester-Pulverlacke nach mindestens einem der vorherigen Ansprüche,
**dadurch gekennzeichnet,**
**dass** der (semi)kristalline Polyester B2) und eine Funktionalität von 2,0 bis 4,0, eine COOH-Zahl von 5 bis 150 mg KOH/g, einen Schmelzpunkt von 60 bis 130 °C und eine Glasübergangstemperatur von < -10°C aufweist.

16. Polyester-Pulverlacke nach Anspruch 15,
**dadurch gekennzeichnet,**
**dass** der (semi)kristalline Polyester B2) als Säurekomponente Bernsteinsäure, und/oder Adipinsäure und/oder Sebacinsäure und/oder Dodecandisäure in Mengen von mindestens 85 %, bezogen auf die Gesamtmenge aller Carbonsäuren, enthält.

17. Polyester-Pulverlacke nach Anspruch 16,
**dadurch gekennzeichnet,**
**dass** maximal 15 mol-% andere aliphatische, cycloaliphatische oder aromatische Dicarbonsäuren enthalten sind.

18. Polyester-Pulverlacke nach Anspruch 17,
**dadurch gekennzeichnet,**
**dass** Glutarsäure, Azelainsäure, 1,4-, 1,3- oder 1,2-Cyclohexandicarbonsäure, Terephthalsäure oder Isophthalsäure, allein oder in Mischungen, enthalten sind.

19. Polyester-Pulverlacke nach Anspruch 15 bis 18,
**dadurch gekennzeichnet,**
**dass** als Polyolkomponente Monoethylenglykol, Butandiol-1,4 oder Hexandiol-1,6 in Mengen von mindestens 80 mol-%, bezogen auf die Gesamtmenge aller Polyole, allein oder in Mischungen, enthalten sind.

20. Polyester-Pulverlacke nach Anspruch 19,
**dadurch gekennzeichnet,**
**dass** maximal 20 mol-% andere aliphatische und/oder cycloaliphatische, lineare und/oder verzweigte Polyole enthalten sind.

21. Polyester-Pulverlacke nach Anspruch 20,
**dadurch gekennzeichnet,**
**dass** Diethylenglykol, Hydroxypivalinsäureneopentylglykol, Neopentylglykol, Cyclohexandimethanol, Pentandiol-1,5, Pentandiol-1,2, Nonandiol-1,9, Trimethylolpropan, Glyzerin oder Pentaerythrit, allein oder in Mischungen, enthalten sind.

22. Polyester-Pulverlacke nach mindestens einem der Ansprüche 1 bis 21,
**dadurch gekennzeichnet,**
**dass** als Vernetzer C) TGIC und/oder TGIC-Derivate und/oder β-Hydroxyalkylamide enthalten sind.

23. Polyester-Pulverlacke nach Anspruch 22,
**dadurch gekennzeichnet,**
**dass** β-Hydroxyalkylamide der Formel enthalten sind: 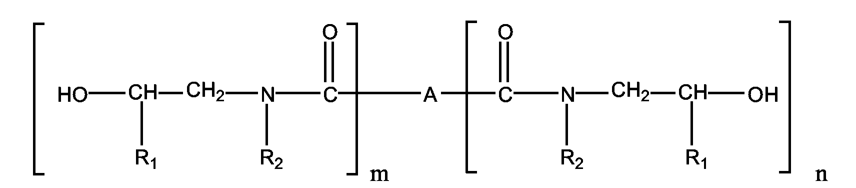 in der R₁ Wasserstoff, ein aromatischer Rest oder eine C₁-C₅-Alkylgruppe, R₂ Wasserstoff ein aromatischer Rest eine C₁-C₅-Alkylgruppe oder 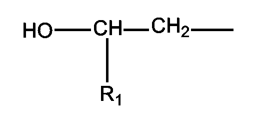 und A eine chemische Bindung oder eine einwertige oder mehrwertige organische Gruppe, ausgewählt aus gesättigten, ungesättigten oder aromatischen Kohlenwasserstoffgruppen, oder substituierten Kohlenwasserstoffgruppen, mit 2 bis 20 Kohlenstoffatomen, bedeuten, m ist 1 bis 2, n ist 0 bis 2 und m + n ist mindestens 1.

24. Polyester-Pulverlacke nach Anspruch 23,
**dadurch gekennzeichnet,**
**dass** 2 - 10 Gew.-%, bevorzugt 3 - 5 Gew.-%, β-Hydroxyalkylamid enthalten sind.
